# EUROPÄISCHE PATENTSCHRIFT

(11) **EP 2 751 157 B1**
(45) Veröffentlichungstag und Bekanntmachung des Hinweises auf die Patenterteilung: **09.10.2019**
(21) Anmeldenummer: 12750786.1
(22) Anmeldetag: 29.08.2012
(51) Int. Cl.: C08G 18/18, B29C 44/12, B29C 44/38, F16L 13/02, F16L 59/14, F16L 58/18

(54) **VERFAHREN ZUR HERSTELLUNG VON GEDÄMMTEN ROHREN MIT VERBESSERTEN EIGENSCHAFTEN**
METHOD FOR PRODUCING INSULATED PIPES HAVING IMPROVED PROPERTIES
PROCÉDÉ DE FABRICATION DE TUYAUX ISOLÉS À PROPRIÉTÉS AMÉLIORÉES

(30) Priorität: 31.08.2011 EP 11179510
(43) Veröffentlichungstag der Anmeldung: 09.07.2014
(73) Patentinhaber: BASF SE, 67056 Ludwigshafen am Rhein (DE)
(72) Erfinder: GRIESER-SCHMITZ, Christof, 49088 Osnabrück (DE); TOMASI, Gianpaolo, 49356 Diepholz (DE); WINDELER, Ludwig, 49448 Marl (DE); POPOV, Alex, 49448 Lemförde (DE); ELLERSIEK, Carsten, 49525 Lengerich (DE); HALWE-BOMMELMANN, Annika, 32369 Rahden - Varl (DE)
(74) Vertreter: BASF IP Association
(86) Internationale Anmeldenummer: PCT/EP2012/066719
(87) Internationale Veröffentlichungsnummer: WO 2013/030203

(56) Entgegenhaltungen:
- EP-A1- 1 777 242
- EP-A2- 0 633 276
- EP-A2- 1 552 915
- EP-A2- 1 783 152
- WO-A1-2008/025660

## Beschreibung

Die vorliegende Erfindung betrifft ein Verfahren zur Herstellung von gedämmten Rohren, umfassend die Schritte (A) Bereitstellen von Mediumrohr und Mantelrohr, wobei das Mediumrohr innerhalb des Mantelrohres angeordnet ist und zwischen Mediumrohr und Mantelrohr ein Ringspalt ausgebildet wird, (B) Einfüllen eines Polyurethansystems umfassend mindestens eine Isocyanatkomponente (a), mindestens eine Polyolmischung (b) und mindestens einen Katalysator in den Ringspalt und (C) Aufschäumen und Aushärtenlassen des Polyurethansystems, wobei die Startzeit für das Polyurethansystem kleiner oder gleich der Einfüllzeit ist, und die Verwendung eines Polyurethansystems umfassend eine Isocyanatkomponente (a), eine Polyolmischung (b) und mindestens einen Katalysator zur Herstellung von gedämmten Rohren, wobei die Startzeit für das Polyurethansystem kleiner ist als die Zeit für das Einfüllen des Polyurethansystems in das Rohr.

Mit Polyurethanschaumstoffen gedämmte Rohre sind im Stand der Technik bekannt und beispielsweise in EP-A-865 893 und DE-A-197 42 012 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

In der rohrverarbeitenden Industrie ist es daher erstrebenswert, möglichst wenige Muffenverbindungen, bezogen auf die Länge einer Leitung, zu installieren. Dies wird erreicht durch den Einsatz von längeren Einzelrohrsegmenten, deren Produktion allerdings erhöhte Anforderungen stellt und häufig zu technischen Problemen führt.

Der größte Teil der Einzelrohre wird mit Hilfe der diskontinuierlichen Rohr-in-Rohr Produktion hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird aufgrund seiner hervorragenden Dämmeigenschaften mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

In der EP 1 552 915 A2 wird ein Verfahren zur Herstellung von gedämmten Rohren offenbart, wobei ein Polyurethansystem enthaltend eine Isocyanatkomponente und eine Polyolkomponente mit einer niedrigen Viskosität von kleiner 3000 mPas in ein entsprechendes Rohr mit einem Mediumrohr und einem Mantelrohe eingefüllt wird. Nach dem Einfüllen schäumt das Polyurethansystem auf und härtet gleichzeitig aus. Als Katalysatoren für die Polyurethanbildung werden Amine wie Triethylamin oder 1,4-Diaza-bicyclo-(2,2,2)-octan eingesetzt.

Die EP 1 783 152 A2 offenbart ebenfalls ein Verfahren zur Herstellung von gedämmten Rohren, wobei ein Polyurethansystem enthaltend eine Isocyanatkomponente und eine Polyolkomponente mit besonders niedriger Viskosität von weniger als 1300 mPas in ein Rohr enthaltend ein Mediumrohr und ein Mantelrohreingefüllt wird. Auch dieses Dokument nennt als geeignete Katalysatoren Amine wie Triethylamin oder 1,4-Diaza-bicyclo-(2,2,2)-octan.

In den Schriften EP 1 552 915 A2 und EP 1 783 152 A2 werden demnach Verfahren beschrieben, um gedämmte Rohre herzustellen, in denen das Problem einer vollständigen Befüllung des Rohres vor Aufschäumen und Aushärten dadurch gelöst wird, dass Polyolkomponenten mit besonders geringer Viskosität und damit einer guten Fließfähigkeit eingesetzt werden.

EP 1 777 242 A1 offenbart ein gedämmtes Rohr aufgebaut aus Mediumrohr, Polyurethan-schaumstoff und Mantelrohr und ein Verfahren zu dessen Herstellung unter Verwendung eines speziellen Katalysators.

Um, insbesondere ökonomisch gewünschte, längere vorgedämmte Rohre zu fertigen, muss daher das Reaktionsprofil des reagierenden Polyurethan-Schaumes im Allgemeinen sehr langsam eingestellt sein. Dies beruht auf der Tatsache, dass der Schaum im flüssigen (noch nicht reagierendem) Zustand im Rohr eine gute Vorverteilung erreichen muss. Weiterhin muss bei großen Rohrdimensionen genügend Zeit zur Verfügung stehen, um das benötigte Polyurethan-Material innerhalb der Startzeit in den Ringspalt einzufüllen. Für beides benötigt man eine lange Startzeit. Lange Startzeiten führen allerdings zu größeren Zelldurchmessern, die, da der Radius der Zelle in die Berechnung quadratisch eingeht, zu einer signifikanten Erhöhung der Wärmeleitfähigkeit führen. Aus ökonomischen und ökologischen Überlegungen heraus ist jedoch eine minimale Wärmeleitfähigkeit des Schaumes und somit eine maximale Energieeinsparung gewünscht.

Zusätzlich führt ein langsames Reaktionsprofil des Polyurethan-Schaumes zu entsprechend höherem Zeitbedarf bei der Produktion der Rohrstangen. Zur Erhöhung der Produktivität und der damit einhergehenden Senkung der Produktionskosten, ist daher ebenfalls eine Beschleunigung des Reaktionsprofiles wünschenswert.

Weiterhin ist für die Qualität der Rohre eine gleichmäßige Rohdichteverteilung des Schaumstoffes wichtig. Diese ist jedoch bei Einsatz der aus dem Stand der Technik bekannten Polyurethansysteme nicht vorteilhaft. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaums im Rohrspalt.

Aufgrund einer begrenzten am Markt verfügbaren maximalen Austragsleistung für das Polyurethan-Reaktionsgemisch ist die maximale Dämmschichtstärke bei gleichzeitig gewünschter großer Rohrlänge begrenzt. Die Möglichkeit über die Startzeit hinaus in den Ringspalt einfüllen zu können, führt zur technischen Realisierbarkeit von größeren Dämmschichtstärken. Diese sind gewünscht, um den Wärmeverlust des gedämmten Rohres zu minimieren.

Aufgabe der Erfindung war es ein Verfahren zur Herstellung von gedämmten Rohren bereitzustellen, wobei Rohre erhalten werden, die sich durch eine niedrige Gesamtrohdichte, sowie kleine Zelldurchmesser des enthaltenen Polyurethan-Schaumstoffs und damit durch eine geringe Wärmeleitfähigkeit auszeichnen. Ebenso soll ein schnelles Verfahren bereitgestellt werden, mit dem in kurzer Zeit qualitativ hochwertige, gedämmte Rohre hergestellt werden können. Weiterhin sollen dickere Dämmschichtstärken möglich werden.

Diese Aufgaben werden erfindungsgemäß gelöst durch ein Verfahren zur Herstellung von gedämmten Rohren, umfassend die Schritte:
(A) Bereitstellen von Mediumrohr und Mantelrohr, wobei das Mediumrohr innerhalb des Mantelrohres angeordnet ist und zwischen Mediumrohr und Mantelrohr ein Ringspalt ausgebildet wird,
(B) Einfüllen eines Polyurethansystems umfassend mindestens eine Isocyanatkomponente (a), mindestens eine Polyolmischung (b) und mindestens einen Katalysator in den Ringspalt und
(C) Aufschäumen und Aushärtenlassen des Polyurethansystems,
wobei die Startzeit für das Polyurethansystem kleiner oder gleich der Einfüllzeit ist, und der mindestens eine Katalysator bevorzugt ein Amin gemäß der allgemeinen Formel (I)

R¹R²N(CR³R⁴)ₙ-X (I),

ist, wobei R¹, R², R³, R⁴, n und X die folgenden Bedeutungen haben:
- R¹, R²: unabhängig voneinander C₁-C₈-Alkylrest,
- R³, R⁴: unabhängig voneinander Wasserstoff, C₁-C₈-Alkylrest,
- n: ganze Zahl von 1 bis 6 und
- X: OR⁵ oder NR⁶R⁷ mit
R⁵ C₁-C₈-Alkylrest oder C₁-C₈-Heteroalkylrest,
R⁶ unabhängig voneinander Wasserstoff, C₁-C₈-Alkylrest
- R⁷: C₁-C₈-Alkylrest oder C₁-C₈-Heteroalkylrest.

Erfindungsgemäß wird unter der Startzeit des Polyurethansystems die Zeit verstanden, die vom Zusammengeben der zur Reaktion benötigten Komponenten, d. h. Isocyanatkomponente (a), Polyolkomponente (b) und mindestens ein Katalysator, bei der geeigneten Reaktionstemperatur bis zu einem merklichen Anspringen der Polymerisationsreaktion vergeht. Das Anspringen der Polymerisationsreaktion kann beispielsweise durch einen Anstieg der Viskosität der Reaktionsmischung oder eine beginnende Volumenausdehnung des flüssigen Reaktionsgemisches festgestellt werden.

Erfindungsgemäß wird unter der Einfüllzeit gemäß Schritt (B) die Zeit verstanden, die benötigt wird, um 100% des benötigten Reaktionsgemsiches in den Ringspalt einzufüllen.

Erfindungsgemäß ist die Startzeit des Polyurethansystems kleiner oder gleich der Einfüllzeit, bevorzugt mindestens 5% kleiner, besonders bevorzugt mindestens 10% kleiner, ganz besonders bevorzugt mindestens 15% kleiner, insbesondere mindestens 20% kleiner als die Einfüllzeit.

Die einzufüllende Menge an Polyurethansystem wird dabei in Abhängigkeit von Art, Zusammensetzung, gewünschtem Füllgrad, Expansionsverhalten, Rohrdimensionen etc. bestimmt.

Das erfindungsgemäße Verfahren ist im Allgemeinen ein diskontinuierliches Verfahren.

Die einzelnen Schritte des erfindungsgemäßen Verfahrens werden im Folgenden detailliert erläutert:

### Schritt (A):

Schritt (A) des erfindungsgemäßen Verfahrens umfasst das Bereitstellen von Mediumrohr und Mantelrohr, wobei das Mediumrohr innerhalb des Mantelrohres angeordnet ist und zwischen Mediumrohr und Mantelrohr ein Ringspalt ausgebildet wird.

Das Mediumrohr, welches einen geringeren Durchmesser aufweist als das Mantelrohr ist so innerhalb des Mantelrohres angeordnet, dass sich zwischen Mediumrohr und Mantelrohr ein Ringspalt ausbildet. In diesen Ringspalt wird in dem erfindungsgemäßen Schritt (B) das Polyurethansystem eingefüllt.

Bei dem erfindungsgemäß eingesetzten Mediumrohr handelt es sich im Allgemeinen um ein Stahlrohr mit einem Außendurchmesser von beispielsweise 1 bis 120 cm, bevorzugt 4 bis 110 cm. Die Länge des Mediumrohres beträgt beispielsweise 1 bis 24 Meter, bevorzugt 6 bis 16 Meter. In einer bevorzugten Ausführungsform des erfindungsgemäßen Verfahrens wird als Mantelrohr ein Wickelfalzblech eingesetzt wird.

Das erfindungsgemäß eingesetzte Mantelrohr kann im Allgemeinen jedes dem Fachmann für geeignet erscheinendes Material enthalten, beispielsweise auf Basis eines thermoplastischen Kunststoffs bevorzugt Polyethylen.

Die vorliegende Erfindung betrifft daher bevorzugt das erfindungsgemäße Verfahren, wobei als Mantelrohr ein Rohr auf der Basis von thermoplastischem Kunststoff eingesetzt wird.

Das Mantelrohr weist im Allgemeinen eine Dicke von 1 bis 30 mm auf. Der Innendurchmesser des Mantelrohrs beträgt im Allgemeinen 6 bis 140 cm, bevorzugt 10 bis 120 cm. Die Länge des Mantelrohres beträgt beispielsweise 1 bis 24 Meter, bevorzugt 6 bis 16 Meter.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung mindestens eine metallische Lage enthält. Geeignete Mantelrohre dieses Typs sind in EP-A-960 723 beschrieben.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2009 erfüllt.

Das Doppelrohr aus Mediumrohr und Mantelrohr wird erfindungsgemäß bevorzugt auf einem neigbaren Schäumtisch bereitgestellt, so dass es in einem Winkel von 0° bis 10°, bevorzugt 0° bis 7°, geneigt werden kann. Die Enden des Doppelrohres werden bevorzugt mit Abschlusskappen versehen, die mit Entlüftungslöchern ausgestattet sind.
Erfindungsgemäß kann das Einfüllen des Polyurethansystems an einem Ende des Rohres oder in der Mitte oder an jeder Stelle zwischen einem Ende und der Mitte, jeweils in den dort befindlichen Ringspalt zwischen Mediumrohr und Mantelrohr, erfolgen.

Die vorliegende Erfindung betrifft daher bevorzugt das erfindungsgemäße Verfahren, wobei das Einfüllen des Polyurethansystems gemäß Schritt (B) an einem Ende des Rohres oder in der Mitte des Rohres oder an jeder Stelle zwischen einem Ende und der Mitte des Rohres erfolgt.

In einer bevorzugten Ausführungsform des erfindungsgemäßen Verfahrens wird das Polyurethansystem in Schritt (B) in der Mitte des Doppelrohrs aus Mediumrohr und Mantelrohr, welches in Schritt (A) bereitgestellt wird, eingefüllt. Das Doppelrohr wird daher in Schritt (A) entsprechend ausgerichtet, beispielsweise waagerecht.

Erfindungsgemäß wird unter Mitte des Rohres ein Bereich verstanden, der bei etwa 35 bis 70%, bevorzugt 40 bis 60%, besonders bevorzugt 45 bis 55% der Länge des Mantelrohres liegt.

In Schritt (A) des erfindungsgemäßen Verfahrens werden an das Doppelrohr aus Mantelrohr und Mediumrohr bevorzugt alle weiteren Einrichtungen, beispielsweise zum Einfüllen des Polyurethansystems, zum Entlüften des Ringspaltes, zum Temperieren etc. angebracht.

### Schritt (B):

Schritt (B) des erfindungsgemäßen Verfahrens umfasst das Einfüllen eines Polyurethansystems umfassend mindestens eine Isocyanatkomponente (a), mindestens eine Polyolmischung (b) und mindestens einen Katalysator in den Ringspalt.

Das Einfüllen des Polyurethansystems gemäß Schritt (B) in den Ringspalt zwischen Mediumrohr und Mantelrohr erfolgt beispielsweise mittels einer dem Fachmann bekannten Polyurethandosiermaschine.

Das flüssige Reaktionsgemisch, d. h. das erfindungsgemäße Polyurethansystem fließt während und nach dem Einfüllen in noch flüssiger Form im Ringspalt hinunter, bis die Polymerisationsreaktion mit Schaumbildung einsetzt. Ab diesem Zeitpunkt findet die weitere Verteilung durch Fließen des langsam in der Viskosität ansteigenden Schaums statt, bis das Material ausreagiert ist.

Das in Schritt (B) des erfindungsgemäßen Verfahrens eingesetzte Polyurethansystem wird im Folgenden detailliert erläutert.

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente Roh-MDI eingesetzt.

In einer bevorzugten Ausführungsform wird die Isocyanatkomponente (a) so gewählt, dass sie eine Viskosität weniger als 800 mPas, bevorzugt von 100 bis 650, besonders bevorzugt von 120 bis 400, insbesondere von 180 bis 350 mPas, gemessen nach DIN 53019 bei 20 °C, aufweist.

Im Rahmen dieser Erfindung ist es bevorzugt, dass die erfindungsgemäßen Polyurethansysteme und Polyurethanschaumstoffe im Wesentlichen frei von Isocyanuratgruppen sind. Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäß eingesetzten Polyurethan-Schaumstoff im Wesentlichen keine Isocyanuratgruppen vorhanden.

Im erfindungsgemäß eingesetzten Polyurethansystem enthält die Polyolmischung (b) im Allgemeinen Polyole als Bestandteil (b1), und gegebenenfalls chemische Treibmittel als Bestandteil (b2). Im Allgemeinen enthält die Polyolmischung (b) physikalische Treibmittel (b6).
Die Viskosität der erfindungsgemäß eingesetzten Polyolmischung (b) (jedoch ohne physikalische Treibmittel (b6)) beträgt im Allgemeinen 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C. In einer besonders bevorzugten Ausführungsform wird in dem erfindungsgemäßen Verfahren eine Polyolmischung (b) (jedoch ohne physikalische Treibmittel (b6)) eingesetzt, die eine Viskosität von mehr als 3000 mPas, beispielsweise 3100 bis 8000 mPas, jeweils gemessen nach DIN 53019 bei 20 °C, aufweist.

Die vorliegende Erfindung betrifft daher bevorzugt das erfindungsgemäße Verfahren, wobei eine Polyolmischung (b) (jedoch ohne physikalische Treibmittel (b6)) eingesetzt wird, die eine Viskosität von mehr als 3000 mPas, beispielsweise 3100 bis 8000 mPas, jeweils gemessen nach DIN 53019 bei 20 °C, aufweist.

Die Polyolmischung (b) enthält im Allgemeinen physikalische Treibmittel (b6). Die Zugabe von physikalischem Treibmittel führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln (b6) beziehen.

Als Polyole (Bestandteil b1) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole (b1) weisen eine Hydroxylzahl von im Allgemeinen größer als 100 mg KOH/g, bevorzugt größer als 150 mg KOH/g, besonders bevorzugt größer als 200 mg KOH/g auf. Als Obergrenze der Hydroxylzahl hat sich im Allgemeinen 1000 mg KOH/g, bevorzugt 800 mg KOH/g, besonders 700 mg KOH/g ganz besonders 600 KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin (EDA), Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und EDA verwendet.

Die Polyolmischung kann ferner optional als Bestandteil (b2) chemische Treibmittel enthalten. Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente (b), eingesetzt.

Wie vorstehend erwähnt, enthält die Polyolmischung (b) im Allgemeinen ein physikalisches Treibmittel (b6). Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Cyclopentan, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten (b) eingesetzt.

Die vorliegende Erfindung betrifft daher bevorzugt das erfindungsgemäße Verfahren, wobei das Polyurethansystem mit Cyclopentan als physikalischem Treibmittel verschäumt wird.

In einer bevorzugten Ausführungsform enthält die Polyolmischung (b) als Bestandteil (b3) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer (b3) werden im Allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel (b6)), eingesetzt.

In einer weiteren bevorzugten Ausführungsform enthält die Polyolmischung (b) als Bestandteil (b4) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel (b4) werden im Allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b3) und (b4) können in der Polyolmischung einzeln oder in Kombination eingesetzt werden.

Durch Umsetzung des erfindungsgemäßen Polyurethansystems sind die erfindungsgemäß als Dämmmaterial vorliegenden Polyurethanschaumstoffe erhältlich.
Bei der Umsetzung werden die Polyisocyanate (a) und die Polyolmischung (b) im Allgemeinen in solchen Mengen zur Umsetzung gebracht, dass die Isocyanat-Kennzahl des Schaums 90 bis 240, bevorzugt 90 bis 200, besonders bevorzugt 95 bis 180, ganz besonders bevorzugt 95 bis 160, insbesondere 100 bis 149, beträgt.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,2 N/mm², bevorzugt größer 0,25 N/mm², besonders bevorzugt grösser 0,3 N/mm², gemessen nach DIN 53421, aufweist.

Im Allgemeinen beträgt in dem erfindungsgemäßen Verfahren die Gesamteinschussrohdichte weniger als 80 kg/m³, bevorzugt weniger als 75 kg/m³, besonders bevorzugt weniger als 70 kg/m³, ganz besonders bevorzugt weniger als 65 kg/m³, insbesondere weniger als 60 kg/m³. Unter Gesamteinschussrohdichte wird im Allgemeinen die Gesamtmenge an eingefülltem flüssigem Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Rohrspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 4,0, bevorzugt kleiner 3,5, besonders bevorzugt kleiner 3,0 und ganz besonders bevorzugt kleiner 2,5 durchgeführt wird.

Das in Schritt (B) des erfindungsgemäßen Verfahrens eingesetzte Polyurethansystem enthält des Weiteren wenigstens einen Katalysator. Erfindungsgemäß wird wenigstens ein Katalysator eingesetzt, der es ermöglicht, dass die Startzeit für das Polyurethansystem kleiner ist als die Zeit für das Einfüllen gemäß Schritt (B). Dadurch, dass erfindungsgemäß die Startzeit für das Polyurethansystem kleiner als die Zeit für das Befüllen gemäß Schritt (B) ist, wird erfindungsgemäß überraschenderweise ein Verfahren bereitgestellt, bei dem die Vorteile, dass zum einen der Ringspalt des erfindungsgemäß hergestellten Rohres gleichmäßig und vollständig mit Polyurethan-Schaumstoff gefüllt werden kann, und dass zum zweiten ein Schaum erhalten wird, der aufgrund der schnellen Startzeit kleine Zellen aufweist und dadurch eine besonders niedrige Wärmeleitfähigkeit aufweist, kombiniert sind.

Die erfindungsgemäß bevorzugt eingesetzten Katalysatoren katalysieren die Treibreaktion, d. h. die Reaktion von Diisocyanat mit Wasser. Diese Reaktion findet überwiegend vor der eigentlichen Polyurethankettenbildung, d. h. der Polymerisationsreaktion, statt und führt daher zu einem schnellen Reaktionsprofil des Polyurethansystems.

Die vorliegende Erfindung betrifft das erfindungsgemäße Verfahren, wobei der mindestens eine Katalysator ein Amin gemäß der allgemeinen Formel (I)

R¹R²N(CR³R⁴)ₙ-X (I),

ist, wobei R¹, R², R³, R⁴, n und X die folgenden Bedeutungen haben:
- R¹, R²: unabhängig voneinander C₁-C₈-Alkylrest,
- R³, R⁴: unabhängig voneinander Wasserstoff, C₁-C₈-Alkylrest,
- n: ganze Zahl von 1 bis 6 und
- X: OR⁵ oder NR⁶R⁷ mit
R⁵ C₁-C₈-Alkylrest oder C₁-C₈-Heteroalkylrest,
R⁶ unabhängig voneinander Wasserstoff, C₁-C₈-Alkylrest
R⁷ C₁-C₈-Alkylrest oder C₁-C₈-Heteroalkylrest.

Die Bedeutungen und bevorzugte Ausführungsformen von R¹, R², R³, R⁴, R⁵, R⁶ und R⁷, sowie X und n werden im Folgenden erläutert:
R¹ und R² bedeuten unabhängig voneinander einen C₁-C₈-Alkylrest, bevorzugt einen C₁-C₄-Alkylrest. Entsprechende Reste können erfindungsgemäß linear oder verzweigt, bevorzugt linear, sein. Beispiele für besonders bevorzugte Reste für R¹ und R² sind Methyl, Ethyl, Propyl, beispielsweise n-Propyl oder iso-Propyl, Butyl, beispielsweise n-Butyl oder iso-Butyl. In einer bevorzugten Ausführungsform sind R¹ und R² gleich, ganz besonders bevorzugt sind R¹ und R² Methyl.

R³ und R⁴ bedeuten unabhängig voneinander Wasserstoff oder einen C₁-C₈-Alkylrest, bevorzugt Wasserstoff oder einen C₁-C₄-Alkylrest. Entsprechende Reste können erfindungsgemäß linear oder verzweigt, bevorzugt linear, sein. Beispiele für bevorzugte Reste für R³ und R⁴ sind Methyl, Ethyl, Propyl, beispielsweise n-Propyl oder iso-Propyl, Butyl, beispielsweise n-Butyl oder iso-Butyl. In einer bevorzugten Ausführungsform sind R³ und R⁴ gleich, ganz besonders bevorzugt sind R³ und R⁴ Wasserstoff.

n beschreibt in der allgemeinen Formel (I) die Anzahl der vorliegenden -CR³R⁴-Gruppen. n ist im Allgemeinen eine ganze Zahl von 1 bis 6, beispielsweise 1, 2, 3, 4, 5 oder 6, besonders bevorzugt ist n gleich 2.

In der allgemeinen Formel (I) bedeutet X in einer ersten Ausführungsform OR⁵ mit R⁵ gleich C₁-C₈-Alkylrest, bevorzugt C₁-C₄-Alkylrest oder C₁-C₈-Heteroalkylrest.

Für R⁵ geeignete C₁-C₈-Alkylreste, bevorzugt C₁-C₄-Alkylreste, können erfindungsgemäß linear oder verzweigt, bevorzugt linear, sein. Beispiele für bevorzugte Reste für R⁵ sind Methyl, Ethyl, Propyl, beispielsweise n-Propyl oder iso-Propyl, Butyl, beispielsweise n-Butyl oder iso-Butyl.

In einer bevorzugten Ausführungsform bedeutet X OR⁵ mit R⁵ gleich C₁-C₈-Heteroalkylrest, bevorzugt C₁-C₅-Heteroalkyrest. Zusätzlich zu den Kohlenstoffatomen liegen in den erfindungsgemäß bevorzugten C₁-C₅-Heteroalkyresten 1 bis 3 Heteroatome vor.

Erfindungsgemäß geeignete Heteroatome sind N, O, P, S, bevorzugt N und O. Erfindungsgemäß vorliegende Heteroalkylreste können linear oder verzweigt sein.

Besonders bevorzugte Gruppen R⁵ sind -CH₂-CH₂-N(CH₃)₂ oder -CH₂-CH₂-OH.

In der allgemeinen Formel (I) bedeutet X in einer zweiten Ausführungsform NR⁶R⁷ mit R⁶ unabhängig voneinander Wasserstoff, C₁-C₈-Alkylrest, bevorzugt C₁-C₄-Alkylrest oder C₁-C₈-Heteroalkylrest, und R⁷ gleich unabhängig voneinander C₁-C₈-Alkylrest, bevorzugt C₁-C₄-Alkyrest oder C₁-C₈-Heteroalkylrest.

Bevorzugt bedeutet R⁶ Wasserstoff oder C₁-C₈-Heteroalkylrest. Entsprechende Reste können erfindungsgemäß linear oder verzweigt, bevorzugt linear, sein. Beispiele für bevorzugte Reste für R⁶ sind Wasserstoff, Methyl, Ethyl, Propyl, beispielsweise n-Propyl oder iso-Propyl, Butyl, beispielsweise n-Butyl oder iso-Butyl. In einer besonders bevorzugten Ausführungsform ist R⁶ Methyl oder Ethyl.

Bevorzugt bedeutet R⁷ C₁-C₈-Heteroalkylrest, bevorzugt C₁-C₅-Heteroalkyrest. Zusätzlich zu den Kohlenstoffatomen liegen in den erfindungsgemäß bevorzugten C₁-C₅-Heteroalkyresten 1 bis 3 Heteroatome vor.

Besonders bevorzugte Gruppen R⁷ sind -CH₂-CH₂-N(CH₃)₂ oder -CH₂-CH₂-OH.

Somit bedeutet in der allgemeinen Formel (I) X bevorzugt -O-CH₂-CH₂-N(CH₃)₂, -O-CH₂-CH₂-OH, -N(CH₃)CH₂-CH₂-N(CH₃)₂ oder -N(CH₃)CH₂-CH₂-OH.

Erfindungsgemäß ganz besonders bevorzugt eingesetzte Katalysatoren sind daher ausgewählt aus der Gruppe bestehend aus N,N,N,N,N-Pentamethyldiethylentriamin (Ia), Bis-(dimethylaminoethyl)-ether (Ib), N,N-Dimethylaminoethyl-N-methylethanolamin (Ic), N,N-Dimethylaminoethoxyethanol (Id) und Mischungen davon. Die genannten besonders bevorzugten Katalysatoren sind im Folgenden abgebildet:

(CH₃)₂N-CH₂-CH₂N(CH₃)CH₂-CH₂-N(CH₃)₂ (Ia)

(CH₃)₂N-CH₂-CH₂-O-CH₂-CH₂-N(CH₃)₂ (Ib)

(CH₃)₂N-CH₂-CH₂N(CH₃)CH₂-CH₂-OH (Ic)

(CH₃)₂N-CH₂-CH₂-O-CH₂-CH₂-OH (Id)

Die vorliegende Erfindung betrifft daher bevorzugt das erfindungsgemäße Verfahren, wobei der mindestens eine Katalysator ausgewählt ist aus der Gruppe bestehend aus N,N,N,N,N-Pentamethyldiethylentriamin (la), Bis-(dimethylaminoethyl)-ether (Ib), N,N-Dimethylaminoethyl-N-methylethanolamin (Ic), N,N-Dimethylaminoethoxyethanol (Id) und Mischungen davon.

Die erfindungsgemäß bevorzugten Katalysatoren können dem Polyurethansystem in jeder dem Fachmann bekannten Art zugegeben werden, beispielsweise in Substanz oder als Lösung, beispielsweise als wässrige Lösung.

Bezogen auf die Polyolkomponente (b) wird erfindungsgemäß der mindestens eine Katalysator in einer Menge von 0,01 bis 1,5 Gew.-%, bevorzugt 0,05 bis 1,0 Gew.-%, besonders bevorzugt 0,05 bis 0,5 Gew.-%, ganz besonders bevorzugt 0,1 bis 0,3 Gew.-% zugegeben.

Dem erfindungsgemäß eingesetzten Polyurethansystem können gegebenenfalls auch noch Zusatzstoffe (b5) zugesetzt werden. Unter Zusatzstoffe (b5) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen allgemeinen und bevorzugten Viskositätsbereiche der Komponente (b) sich auf eine Polyolmischung (b) inklusive gegebenenfalls zugesetzter Zusatzstoffe (b5) (aber exklusive gegebenenfalls zugesetztem physikalischem Treibmittel (b6)) beziehen.

Die vorliegende Erfindung betrifft daher bevorzugt das erfindungsgemäße Verfahren, wobei die mindestens eine Polyolmischung (b) Polyole (b1), gegebenenfalls chemische Treibmittel (b2), Vernetzer (b3), Kettenverlängerungsmittel (b4), Zusatzstoffe (b5) und/oder physikalische Treibmittel (b6) enthält.

Die vorliegende Erfindung betrifft daher insbesondere das erfindungsgemäße Verfahren, wobei als Zusatzstoff (b5) zwischen 1 und 25 Gew.-% Flammschutzmittel, bezogen auf das Gesamtgewicht der Polyolmischung, eingesetzt wird.

### Schritt (C):

Schritt (C) des erfindungsgemäßen Verfahrens umfasst das Aufschäumen und Aushärtenlassen des Polyurethansystems.

Nach Einfüllen des Polyurethansystems in den Ringspalt beginnt die Polymerisationsreaktion zur Ausbildung des Polyurethan-Schaumstoffs. Da erfindungsgemäß die Startzeit für das Polyurethansystem kleiner ist als die Zeit für das Einfüllen gemäß Schritt (B), beginnt diese Reaktion schon während weiteres Polyurethansystem eingefüllt wird. Dies ergibt die oben genannten erfindungsgemäßen Vorteile.

Das Aufschäumen und Aushärten erfolgt erfindungsgemäß im Allgemeinen bei einer Komponententemperatur von 18 bis 35 °C, bevorzugt 20 bis 30 °C, besonders bevorzugt 22 bis 28 °C.

Das Aufschäumen und Aushärten erfolgt erfindungsgemäß im Allgemeinen bei Oberflächentemperaturen von 15 bis 50 °C, bevorzugt 20 bis 50 °C, besonders bevorzugt 25 bis 45 °C
Nach Schritt (C) des erfindungsgemäßen Verfahrens wird ein gedämmtes Rohr enthalten, mindestens umfassend ein Mediumrohr, ein Mantelrohr und eine dämmende Schicht zwischen Mediumrohr und Mantelrohr aus Polyurethan-Schaumstoff.

Die dämmende Schicht weist im Allgemeinen eine Dicke von 1 bis 20 cm, bevorzugt 5 bis 20 cm besonders bevorzugt 7 bis 20 cm, auf.

In einer weiteren bevorzugten Ausführungsform weist die dämmende Schicht enthaltend Polyurethan-Schaumstoff eine Wärmeleitfähigkeit von weniger als 27 mW/mK, bevorzugt von 22 bis 26,7, gemessen nach EN ISO 8497 auf.

Die vorliegende Erfindung betrifft auch die Verwendung eines Polyurethansystems umfassend eine Isocyanatkomponente (a), eine Polyolmischung (b) und mindestens einen Katalysator zur Herstellung von gedämmten Rohren, wobei die Startzeit für das Polyurethansystem kleiner ist als die Zeit für das Einfüllen des Polyurethansystems in das Rohr.

Insbesondere betrifft die vorliegende Erfindung die erfindungsgemäße Verwendung, wobei ein Amin der allgemeinen Formel (I)

R¹R²N(CR³R⁴)ₙ-X (I),

wobei R¹, R², R³, R⁴, n und X die folgenden Bedeutungen haben:
- R¹, R²: unabhängig voneinander C₁-C₈-Alkylrest,
- R³, R⁴: unabhängig voneinander Wasserstoff, C₁-C₈-Alkylrest,
- n: ganze Zahl von 1 bis 6 und
- X: OR⁵ oder NR⁶R⁷ mit
R⁵ C₁-C₈-Alkylrest oder C₁-C₈-Heteroalkylrest,
R⁶ unabhängig voneinander Wasserstoff, C₁-C₈-Alkylrest
R⁷ C₁-C₈-Alkylrestoder C₁-C₈-Heteroalkylrest
als Katalysator eingesetzt wird.

Die einzelnen Merkmale dieser weiteren Gegenstände der vorliegenden Erfindung und die bevorzugten Ausführungsformen entsprechen dem bezüglich des erfindungsgemäßen Verfahrens Gesagten.

Das erfindungsgemäße Verfahren zur Herstellung von gedämmten Rohren weist die folgenden Vorteile auf:
1. Vereinfachte Produktion von längeren Rohrsegmenten
2. Abgesenkte Gesamtrohdichte
3. Bessere Rohdichteverteilung
4. Niedrigere Wärmeleitfähigkeit
5. Erhöhte Produktivität durch geringere Aushärtezeiten
6. Kosteneinsparung durch Einsatz von PUR-Dosiermaschinen mit kleinerer Austragsleistung
7. Erhöhung der maximalen Dämmschichtstärke

### Beispiele:

Es werden die folgenden Beispiele 1 (erfindungsgemäß), sowie 2.1 und 2.2 (jeweils Vergleichsbeispiele) durchgeführt. Die eingesetzten Komponenten und die Eigenschaften der Reaktionsmischungen und der erhaltenen Schäume werden in den folgenden Tabellen 1 und 2 angegeben. Verarbeitet wurde der Schaum jeweils auf einer Hochdruck PUR-Dosiermaschine HK 2500 der Fa. Hennecke, St Augustin. Gefüllt wurde jeweils ein Rohr mit Mitteleinschuss mit folgender Dimension: Durchmesser Stahlrohr 250 mm, Durchmesser PE-Außenmantelrohr 450 mm, Ausgeschäumte Länge: 15,6 m.

Verglichen wird die erfindungsgemäße Herstellung eines entsprechenden Rohres (Beispiel 1) mit einem gleichverarbeiteten Standardschaum (Vergleich, Beispiel 2.1) bzw. mit dem Standardschaum, und standardmäßig verarbeitet (Vergleich, Beispiel 2.2). In Beispiel 2.1 wurde beobachtet, dass das Rohr nicht voll wurde. In Beispiel 2.2 wurde beobachtet, dass das Rohr voll wurde, aber mit ein Schaum mit schlechteren Eigenschaften erhalten wurde.

**Tabelle 1:**

| | **Beispiel** | | |
|---|---|---|---|
| | **1** | **2.1** | **2.2** |
| **Polyol A** | 30 | 30 | 30 |
| **Polyol B** | 20 | 20 | 20 |
| **Polyol C** | 40 | 40 | 40 |
| **Polyol D** | 5 | 5 | 5 |
| **Glycerin** | 2 | 2 | 2 |
| **Tegostab B 8462 ® (Goldschmidt AG Essen)** | 1,5 | 1,5 | 1,5 |
| **Katalysator DMCHA** | 0,5 | 0,8 | 0,8 |
| **Katalysator N,N,N,N,N-Pentamethyldiethylentriamin** | 0,2 | - | - |
| **Wasser** | 2,0 | 2,0 | 2,0 |
| **Cyclopentan** | 13 | 13 | 13 |
| **Summe** | 84,2 | 84,3 | 84,3 |
| **Pentan** | 13,0 | 13,0 | 13,0 |
| **Lupranat M 20S** | 164 | 164 | 164 |
| **Isocyanat-Index** | 130 | 130 | 130 |
| **Startzeit [s]** | 15 | 24 | 24 |
| **Abbindezeit [s]** | 82 | 118 | 118 |
| **Freie Rohdichte [kg/m³]** | 32 | 34 | 34 |
| **Lambda-Wert (EN ISO 8497 - 50°C) [mW/m*K]** | 25,4 | - | 26,8 |
| **Einfüllzeit [s]** | 21 | 21 | 29 |
| **Gesamtrohdichte [kg/m³]** | 62 | 62 | 83 |
| **Austrittszeit Rohrende [s]** | 62/68 | - | 120/136 |
| **Durchschnittlicher Zelldurchmesser [µm]** | 190 | - | 260 |
| **Schaumbild** | Keine Schlieren | - | Teilweise Schlieren |
| **Schiebezone an den Enden** | Keine | - | ca. 1,5 m auf jeder Seite |

Wenn nicht anders angegeben sind alle Angaben in Gewichtsteilen. Der durchschnittliche Zelldurchmesser wird gemäß EN 489:2009 (Abschnitt 5.4.5.1) ermittelt.

In Tabelle 1 bedeutet:

| | |
|---|---|
| Tegostab B 8462 ® | Zellstabilisator |
| DMCHA | Gelkatalysator |
| Lupranat M 20S | Diisocyanat |

**Tabelle 2: Eigenschaften der eingesetzten Polyole**

| | **OH-Zahl [mg KOH/g]** | **Funktionalität** | **Viskosität [25 °C]** | **Molekular-gewicht [g/mol]** | **Chem. Grundgerüst** |
|---|---|---|---|---|---|
| **Polyol A** | 400 | 3 | 370 | 420 | Glycerin-PO |
| **Polyol B** | 490 | 4,9 | 23000 | 560 | Sorbitol-PO |
| **Polyol C** | 490 | 4,3 | 8300 | 500 | Saccharose-Glycerin-PO |
| **Polyol D** | 470 | 3,9 | 5000 | 470 | EDA-PO |

## Patentansprüche

1. Verfahren zur Herstellung von gedämmten Rohren, umfassend die Schritte:
(A) Bereitstellen von Mediumrohr und Mantelrohr, wobei das Mediumrohr innerhalb des Mantelrohres angeordnet ist und zwischen Mediumrohr und Mantelrohr ein Ringspalt ausgebildet wird,
(B) Einfüllen eines Polyurethansystems umfassend mindestens eine Isocyanatkomponente (a), mindestens eine Polyolmischung (b) und mindestens einen Katalysator in den Ringspalt und
(C) Aufschäumen und Aushärtenlassen des Polyurethansystems,
**dadurch gekennzeichnet, dass** die Startzeit für das Polyurethansystem kleiner oder gleich der Einfüllzeit ist, und der mindestens eine Katalysator ein Amin gemäß der allgemeinen Formel (I)
R¹R²N(CR³R⁴)ₙ-X (I),
ist, wobei R¹, R², R³, R⁴, n und X die folgenden Bedeutungen haben:
R¹, R² unabhängig voneinander C₁-C₈-Alkylrest,
R³, R⁴ unabhängig voneinander Wasserstoff, C₁₋C₈-Alkylrest,
n ganze Zahl von 1 bis 6 und
X OR⁵ oder NR⁶R⁷ mit
R⁵ C₁-C₈-Alkylrest oder C₁-C₈-Heteroalkylrest,
R⁶ unabhängig voneinander Wasserstoff, C₁-C₈-Alkylrest
R⁷ C₁-C₈-Alkylrest oder C₁-C₈-Heteroalkylrest.

2. Verfahren gemäß Anspruch 1, **dadurch gekennzeichnet, dass** das Einfüllen des Polyurethansystems gemäß Schritt (B) an einem Ende des Rohres oder in der Mitte des Rohres oder an jeder Stelle zwischen einem Ende und der Mitte des Rohres erfolgt.

3. Verfahren gemäß Anspruch 1 oder 2, **dadurch gekennzeichnet, dass** die mindestens eine Polyolmischung (b) Polyole (b1), gegebenenfalls chemische Treibmittel (b2), Vernetzer (b3), Kettenverlängerungsmittel (b4), Zusatzstoffe (b5) und/oder physikalisches Treibmittel (b6) enthält.

4. Verfahren gemäß Anspruch 3, **dadurch gekennzeichnet, dass** als Zusatzstoff (b5) zwischen 1 und 25 Gew.-% Flammschutzmittel, bezogen auf das Gesamtgewicht der Polyolmischung, eingesetzt wird.

5. Verfahren gemäß einem der Ansprüche 1 bis 4, **dadurch gekennzeichnet, dass** die Umsetzung der Isocyanatkomponente (a) mit der Polyolmischung (b) bei einer Kennzahl zwischen 90 und 240 durchgeführt wird.

6. Verfahren gemäß einem der Ansprüche 1 bis 5, **dadurch gekennzeichnet, dass** die Umsetzung bei einer Verdichtung von kleiner 4,0 durchgeführt wird.

7. Verfahren gemäß einem der Ansprüche 1 bis 6, **dadurch gekennzeichnet, dass** das Polyurethansystem mit Cyclopentan als physikalischem Treibmittel verschäumt wird.

8. Verfahren gemäß einem der Ansprüche 1 bis 7, **dadurch gekennzeichnet, dass** als Mantelrohr ein Wickelfalzblech eingesetzt wird.

9. Verfahren gemäß einem der Ansprüche 1 bis 8, **dadurch gekennzeichnet, dass** als Mantelrohr ein Rohr auf der Basis von thermoplastischem Kunststoff eingesetzt wird.

10. Verwendung eines Polyurethansystems umfassend eine Isocyanatkomponete (a), eine Polyolmischung (b) und mindestens einen Katalysator zur Herstellung von gedämmten Rohren, **dadurch gekennzeichnet, dass** die Startzeit für das Polyurethansystem kleiner ist als die Zeit für das Einfüllen des Polyurethansystems in das Rohr.

11. Verwendung nach Anspruch 10, **dadurch gekennzeichnet, dass** ein Amin der allgemeinen Formel (I)
R¹R²N(CR³R⁴)ₙ-X (I),
wobei R¹, R², R³, R⁴, n und X die folgenden Bedeutungen haben:
R¹, R² unabhängig voneinander C₁-C₈-Alkylrest,
R³, R⁴ unabhängig voneinander Wasserstoff, C₁-C₈-Alkylrest,
n ganze Zahl von 1 bis 6 und
X OR⁵ oder NR⁶R⁷ mit
R⁵ C₁-C₈-Alkylrestoder C₁-C₈-Heteroalkylrest,
R⁶ unabhängig voneinander Wasserstoff, C₁-C₈-Alkylrest
R⁷ C₁-C₈-Alkylrest oder C₁-C₈-Heteroalkylrest.
als Katalysator eingesetzt wird.

## Claims

1. A process for producing insulated pipes, which comprises the steps:
(A) provision of a pipe for a medium and a sheathing pipe, wherein the pipe for a medium is arranged within the sheathing pipe and an annular gap is formed between the pipe for a medium and the sheathing pipe,
(B) introduction of a polyurethane system comprising at least one isocyanate component (a), at least one polyol mixture (b) and at least one catalyst into the annular gap and
(C) foaming the polyurethane system and allowing it to cure,
wherein the cream time for the polyurethane system is less than or equal to the introduction time, and the at least one catalyst is an amine of the general formula (I)
R¹R²N (CR³R⁴)ₙ-X (I),
where R¹, R², R³, R⁴, n and X have the following meanings:
R¹, R² are each, independently of one another, a C₁-C₈-alkyl radical,
R³, R⁴ are each, independently of one another, hydrogen or a C₁-C₈-alkyl radical,
n is an integer from 1 to 6 and
X is OR⁵ or NR⁶R⁷ where
R⁵ is a C₁-C₈-alkyl radical or C₁-C₈-heteroalkyl radical,
the radicals R⁶ are each, independently of one another, hydrogen or a C₁-C₈-alkyl radical
R⁷ is a C₁-C₈-alkyl radical or C₁-C₈-heteroalkyl radical.

2. The process according to claim 1, wherein the introduction of the polyurethane system in step (B) is effected at one end of the pipe or in the middle of the pipe or at any point between one end and the middle of the pipe.

3. The process according to claims 1 or 2, wherein the at least one polyol mixture (b) comprises polyols (b1), optionally chemical blowing agents (b2), crosslinkers (b3), chain extenders (b4), additives (b5) and/or physical blowing agent (b6).

4. The process according to claim 3, wherein from 1 to 25% by weight of flame retardants, based on the total weight of the polyol mixture, is used as additive (b5) .

5. The process according to any of claims 1 to 4, wherein the reaction of the isocyanate component (a) with the polyol mixture (b) is carried out at an index in the range from 90 to 240.

6. The process according to any of claims 1 to 5, wherein the reaction is carried out at a compaction of less than 4.0.

7. The process according to any of claims 1 to 6, wherein the polyurethane system is foamed using cyclopentane as physical blowing agent.

8. The process according to any of claims 1 to 7, wherein a folded spiral-seam tube is used as sheathing pipe.

9. The process according to any of claims 1 to 8, wherein a pipe based on a thermoplastic polymer is used as sheathing pipe.

10. The use of a polyurethane system comprising an isocyanate component (a), a polyol mixture (b) and at least one catalyst for producing insulated pipes, wherein the cream time for the polyurethane system is less than the time for introduction of the polyurethane system into the pipe.

11. The use according to claim 10, wherein an amine of the general formula (I)
R¹R²N (CR³R⁴)ₙ-X (I),
where R¹, R², R³, R⁴, n and X have the following meanings:
R¹, R² are each, independently of one another, a C₁-C₈-alkyl radical,
R³, R⁴ are each, independently of one another, hydrogen or a C₁-C₈-alkyl radical,
n is an integer from 1 to 6 and
X is OR⁵ or NR⁶R⁷ where
R⁵ is a C₁-C₈-alkyl radical or C₁-C₈-heteroalkyl radical,
the radicals R⁶ are each, independently of one another, hydrogen or a C₁-C₈-alkyl radical
R⁷ is a C₁-C₈-alkyl radical or C₁-C₈-heteroalkyl radical,
is used as catalyst.

## Revendications

1. Procédé de fabrication de tubes isolés, comprenant les étapes suivantes :
(A) la préparation d'un tube de milieu et d'un tube d'enveloppe, le tube de milieu étant agencé à l'intérieur du tube d'enveloppe, et une fente annulaire étant formée entre le tube de milieu de le tube d'enveloppe,
(B) le remplissage de la fente annulaire avec un système de polyuréthane comprenant au moins un composant isocyanate (a), au moins un mélange de polyols (b) et au moins un catalyseur, et
(C) le moussage et le durcissement du système de polyuréthane,
**caractérisé en ce que** le temps de démarrage pour le système de polyuréthane est inférieur ou égal au temps de remplissage, et ledit au moins un catalyseur est une amine selon la formule générale (I) :
R¹R²N (CR³R⁴)ₙ-X (I)
dans laquelle R¹, R², R³, R⁴, n et X ont les significations suivantes :
R¹, R² indépendamment l'un de l'autre, un radical alkyle en C₁-C₈,
R³, R⁴ indépendamment l'un de l'autre, l'hydrogène, un radical alkyle en C₁-C₈,
n un nombre entier de 1 à 6, et
X OR⁵ ou NR⁶R⁷, avec
R⁵ un radical alkyle en C₁-C₈ ou un radical hétéroalkyle en C₁-C₈,
les R⁶ indépendamment les uns des autres, l'hydrogène, un radical alkyle en C₁-C₈,
R⁷ un radical alkyle en C₁-C₈ ou un radical hétéroalkyle en C₁-C₈.

2. Procédé selon la revendication 1, **caractérisé en ce que** le remplissage du système de polyuréthane selon l'étape (B) a lieu à une extrémité du tube ou au milieu du tube ou à tout emplacement entre une extrémité et le milieu du tube.

3. Procédé selon la revendication 1 ou 2, **caractérisé en ce que** ledit au moins un mélange de polyols (b) contient des polyols (b1), éventuellement des agents gonflants chimiques (b2), des agents de réticulation (b3), des agents d'allongement de chaînes (b4), des additifs (b5) et/ou des agents gonflants physiques (b6) .

4. Procédé selon la revendication 3, **caractérisé en ce qu'**entre 1 et 25 % en poids d'agents ignifuges, par rapport au poids total du mélange de polyols, sont utilisés en tant qu'additif (b5).

5. Procédé selon l'une quelconque des revendications 1 à 4, **caractérisé en ce que** la réaction du composant isocyanate (a) avec le mélange de polyols (b) est réalisée à un indice caractéristique compris entre 90 et 240.

6. Procédé selon l'une quelconque des revendications 1 à 5, **caractérisé en ce que** la réaction est réalisée à une compression inférieure à 4,0.

7. Procédé selon l'une quelconque des revendications 1 à 6, **caractérisé en ce que** le système de polyuréthane est moussé avec du cyclopentane en tant qu'agent gonflant physique.

8. Procédé selon l'une quelconque des revendications 1 à 7, **caractérisé en ce qu'**une tôle agrafée en spirale est utilisée en tant que tube d'enveloppe.

9. Procédé selon l'une quelconque des revendications 1 à 8, **caractérisé en ce qu'**un tube à base d'une matière plastique thermoplastique est utilisé en tant que tube d'enveloppe.

10. Utilisation d'un système de polyuréthane comprenant un composant isocyanate (a), un mélange de polyols (b) et au moins un catalyseur pour la fabrication de tubes isolés, **caractérisée en ce que** le temps de démarrage pour le système de polyuréthane est inférieur au temps de remplissage du tube avec le système de polyuréthane.

11. Utilisation selon la revendication 10, **caractérisée en ce qu'**une amine de la formule générale (I) :
R¹R²N (CR³R⁴)ₙ-X (I)
dans laquelle R¹, R², R³, R⁴, n et X ont les significations suivantes :
R¹, R² indépendamment l'un de l'autre, un radical alkyle en C₁-C₈,
R³, R⁴ indépendamment l'un de l'autre, l'hydrogène, un radical alkyle en C₁-C₈,
n un nombre entier de 1 à 6, et
X OR⁵ ou NR⁶R⁷, avec
R⁵ un radical alkyle en C₁-C₈ ou un radical hétéroalkyle en C₁-C₈,
les R⁶ indépendamment les uns des autres, l'hydrogène, un radical alkyle en C₁-C₈,
R⁷ un radical alkyle en C₁-C₈ ou un radical hétéroalkyle en C₁-C₈,
est utilisée en tant que catalyseur.
